# DEMANDE DE BREVET EUROPEEN

(11) **EP 3 729 966 A1**
(43) Date de publication de la demande: **28.10.2020**
(21) Numéro de dépôt: 20171397.1
(22) Date de dépôt: 24.04.2020
(51) Int. Cl.: A01N 53/00, A01N 25/06, A01P 7/04

(54) **COMPOSITION INSECTICIDE**

(30) Priorité: 25.04.2019 BE 201905281
(71) Demandeur: Group Riem, 5140 Ligny (BE)
(72) Inventeur: Calvo-Armenta, José, 6200 Chatelet (BE); Ragatuso, Michaël, 4040 Herstal (BE)
(74) Mandataire: ABYOO

(57) **Abrégé**

La présente invention porte sur une composition insecticide et sur l'utilisation d'une telle composition pour lutter contre les insectes volants et rampants. La présente invention porte également sur un aérosol insecticide et sur l'utilisation d'un tel aérosol pour lutter contre les insectes volants et rampants.

## Description

La présente invention porte sur une composition insecticide et sur l'utilisation d'une telle composition pour lutter contre les insectes volants et rampants. La présente invention porte également sur un aérosol insecticide et sur l'utilisation d'un tel aérosol pour lutter contre les insectes volants et rampants.

De nombreuses compositions insecticides, notamment sous forme d'aérosols, sont connues et sont largement utilisées afin de lutter contre les insectes volants et les insectes rampants (mouches, moustiques, guêpes, cafards, blattes, araignées, fourmis, punaises, mites, puces, ...).

L'efficacité des compositions insecticides est généralement évaluée selon deux paramètres principaux : le taux d'étourdissement (ou knockdown) et le taux de mortalité. En pratique, suite à l'application d'une composition insecticide, les temps nécessaires pour observer des taux d'étourdissement (ou knockdown) de 10% (KT 10), de 50% (KT 50) et de 95% (KT 95) sont mesurés en prenant en compte les insectes qui ne sont plus capables de se déplacer. Le taux d'étourdissement après une heure (KD 1h) peut aussi être mesuré en prenant également en compte les insectes qui ne sont plus capables de se déplacer. Par exemple, pour les insectes volants, seront considérés comme étourdis ceux qui ne sont plus capables d'assurer un maintien sur leurs pattes et ceux qui sont bloqués sur le dos alors qu'ils peuvent encore bouger les pattes et les ailes sans toutefois pouvoir prendre leur envol ou voler de façon coordonnée. Pour un intervalle de temps donné (par exemple 24h), suite à l'application d'une composition insecticide, le taux de mortalité est quant à lui calculé en prenant en compte les insectes qui sont totalement immobiles et qui ne présentent pas de signes de vie.

La perméthrine est l'une des substances insecticides actuellement utilisée seule ou en combinaison avec une ou plusieurs autres substances insecticides. Cette substance insecticide est particulièrement toxique pour de nombreux animaux et plusieurs études mettent même en avant son potentiel effet toxique chez l'humain. L'un des problèmes majeurs de la perméthrine est sa rémanence importante puisqu'il a été établi que cette substance insecticide peut subsister durant plus d'un mois et jusqu'à 90 jours dans l'environnement, ceci notamment en raison de sa faible dégradation à l'air et à la lumière. Par conséquent, il est reconnu que l'utilisateur d'une composition insecticide comprenant de la perméthrine reste exposé à cette substance bien après l'application de cette dernière, ce qui rend la perméthrine d'autant plus inquiétante pour la santé humaine. Par ailleurs, paradoxalement, il semblerait que la perméthrine peut induire une amélioration de la fécondité et de la reproduction d'insectes-cibles quand ils ne sont exposés qu'à de faibles doses (doses sublétales), ce qui pose la question de l'efficacité globale de cette molécule utilisée en tant qu'insecticide.

Notons que cette problématique de rémanence importante se pose également pour d'autres substances insecticides comme la cyperméthrine, la cyfluthrine ou encore la deltaméthrine.

A ce jour, il existe donc un réel besoin de procurer une composition insecticide alternative ne présentant pas les problèmes mentionnés ci-dessus.

Pour résoudre ces problèmes de l'état de la technique, il est prévu suivant l'invention, une composition insecticide comprenant :
- de la 1 R-trans-phénothrine comme substance insecticide, et
- un solvant dans lequel ladite 1 R-trans-phénothrine est diluée,
ladite composition étant caractérisée en ce que ledit solvant comprend au moins un hydrocarbure lourd présentant une densité comprise entre 0,75 et 0,85 et au moins un hydrocarbure léger présentant une densité comprise entre 0,65 et 0,8.

La 1 R-trans-phénothrine est une molécule insecticide de type pyréthrinoïde (ou pyréthroïde) répondant au numéro CAS 26046-85-5 et correspondant à la formule suivante :

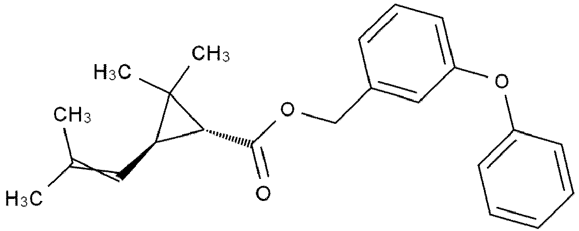

Dans le cadre de la présente invention, il a été mis en évidence qu'une telle composition insecticide selon l'invention comprenant de la 1R-trans-phénothrine comme substance insecticide est au moins aussi efficace qu'une composition insecticide comprenant de la perméthrine en termes de taux d'étourdissement (ou knockdown) et de taux de mortalité, cette composition insecticide selon l'invention présentant par ailleurs une rémanence significativement inférieure par rapport à celle comprenant de la perméthrine. Il a en outre été établi qu'une composition insecticide selon l'invention est polyvalente, c'est-à-dire qu'elle permet de lutter contre plusieurs espèces d'insectes-cibles rampants ou volants. En particulier, il a été observé qu'une composition insecticide selon l'invention permet d'obtenir, afin de lutter contre des insectes-cibles rampants et volants, des taux d'étourdissement KT 10, KT 50 et KT 95 en des laps de temps réduits ainsi qu'un taux de mortalité de 100% après 24h.

De façon avantageuse, la composition insecticide selon l'invention comprend en outre au moins une deuxième substance insecticide additionnelle choisie dans le groupe constitué des composés suivants et de leurs isomères optiques et géométriques : alléthrine, pralléthrine, resméthrine, cyphénothrine, tétraméthrine et leurs mélanges.

De préférence, la composition insecticide selon l'invention comprend de la 1 R-trans-phénothrine comme première substance insecticide et au moins une deuxième substance insecticide additionnelle choisie dans le groupe constitué des composés suivants et de leurs isomères optiques et géométriques : alléthrine, pralléthrine, resméthrine, cyphénothrine, tétraméthrine et leurs mélanges.

Préférentiellement, la deuxième substance insecticide additionnelle est l'alléthrine et ses isomères optiques et géométriques, par exemple la bioalléthrine ou l'esbiothrine ou la S-bioalléthrine.

Préférentiellement, la deuxième substance insecticide est la pralléthrine et ses isomères optiques et géométriques.

Préférentiellement, la deuxième substance insecticide additionnelle est la resméthrine et ses isomères optiques et géométriques, par exemple la bioresméthrine ou la cis-méthrine.

Préférentiellement, la deuxième substance insecticide additionnelle est la cyphénothrine et ses isomères optiques et géométriques, par exemple le D-cyphénothrine.

Préférentiellement, la deuxième substance insecticide additionnelle est la tétraméthrine et ses isomères optiques et géométriques, par exemple la D- tétraméthrine ou la D-trans-tétraméthrine.

Avantageusement, selon l'invention, le rapport en poids de ladite 1 R-trans-phénothrine à ladite au moins une deuxième substance insecticide additionnelle est compris entre 10 : 1 et 1 : 10, de préférence compris entre 10 : 1 et 1 : 5. Un tel rapport en poids de ladite 1 R-trans-phénothrine à ladite au moins une deuxième substance insecticide additionnelle a été défini comme étant optimal afin d'assurer des taux d'étourdissement (ou knockdown) et des taux de mortalité adéquats.

De préférence, selon l'invention, les teneurs en 1 R-trans-phénothrine et en au moins une deuxième substance insecticide additionnelle sont comprises entre 0,03 et 1% en poids, de préférence entre 0,04 et 0,9% en poids, préférentiellement entre 0,05 et 0,75% en poids par rapport au poids total de ladite composition insecticide.

De préférence, selon l'invention, la teneur en 1 R-trans-phénothrine est comprise entre 0,03 et 1% en poids, de préférence entre 0,04 et 0,9% en poids, préférentiellement entre 0,05 et 0,75% en poids par rapport au poids total de ladite composition insecticide.

De préférence, selon l'invention, la teneur en au moins une deuxième substance insecticide additionnelle est comprise entre 0,03 et 1% en poids, de préférence entre 0,04 et 0,9% en poids, préférentiellement entre 0,05 et 0,75% en poids par rapport au poids total de ladite composition insecticide.

De telles teneurs en 1 R-trans-phénothrine et en au moins une deuxième substance insecticide additionnelle ont été définies comme étant optimales afin d'assurer des taux d'étourdissement (ou knockdown) et des taux de mortalité adéquats.

De préférence, selon l'invention, ledit au moins un hydrocarbure lourd présente un taux d'évaporation par rapport à l'éther compris entre 100 et 150.

De préférence, selon l'invention, ledit au moins un hydrocarbure léger présente un taux d'évaporation par rapport à l'éther compris entre 1 et 5.

Par les termes « hydrocarbure lourd », il est donc entendu, au sens de la présente invention, un hydrocarbure présentant une densité comprise entre 0,75 et 0,85 et/ou un taux d'évaporation par rapport à l'éther compris entre 100 et 150.

Par les termes « hydrocarbure léger», il est donc entendu, au sens de la présente invention, un hydrocarbure présentant une densité comprise entre 0,65 et 0,8 et/ou un taux d'évaporation par rapport à l'éther compris entre 1 et 5.

Dans le cadre de la présente invention, il a été mis en avant que la présence simultanée d'au moins un tel hydrocarbure lourd et d'au moins un tel hydrocarbure léger optimise les propriétés insecticides de la 1 R-trans-phénothrine et de ladite au moins une deuxième substance insecticide additionnelle lorsqu'elle est présente. En particulier, l'hydrocarbure lourd permet d'assurer que la composition insecticide selon l'invention se maintient suffisamment longtemps dans une zone où se trouvent les insectes-cibles ou sur les insectes-cibles mêmes afin qu'un taux de mortalité acceptable soit atteint, en particulier un taux de mortalité de 100% après 24h. En parallèle, l'hydrocarbure léger permet d'assurer que la composition insecticide selon l'invention donne lieu rapidement à des taux d'étourdissement KT 10, KT 50 et KT 95.

Avantageusement, selon l'invention, ledit au moins un hydrocarbure lourd et/ou ledit au moins un hydrocarbure léger est un hydrocarbure aliphatique. A la différence d'un hydrocarbure aromatique, un hydrocarbure aliphatique présente une chaîne carbonée ouverte. L'utilisation d'hydrocarbures aliphatiques (ou non aromatiques) permet d'autant plus de procurer une composition insecticide non toxique ou du moins peu toxique pour l'humain.

Préférentiellement, selon l'invention, ledit hydrocarbure lourd est une isoparaffine et ledit hydrocarbure léger est une benzine. En d'autres termes, préférentiellement, lorsque la composition insecticide selon l'invention comprend un solvant, ce dernier comprend simultanément une isoparaffine et une benzine.

Au sens de la présente invention et de façon non limitative, les isoparaffines suivantes peuvent être citées : Shell Sol®, Exxon Isopar®, Isopar® et Total Isane®.

Au sens de la présente invention et de façon non limitative, les benzines suivantes peuvent être citées : Shell SBP®, SBP®, Exxsol DSP® et DSP®.

Avantageusement, selon l'invention, le rapport en poids dudit hydrocarbure lourd à l'hydrocarbure léger est compris entre 3 : 1 et 1 : 1, de préférence compris entre 2: 1 et 1 : 1. Un tel rapport en poids dudit hydrocarbure lourd à l'hydrocarbure léger a été déterminé comme étant optimal afin d'assurer des taux d'étourdissement (ou knockdown) et des taux de mortalité adéquats.

De préférence, selon l'invention, la teneur en solvant lourd est comprise entre 50 et 80% en poids, de préférence entre 55 et 70% en poids, préférentiellement entre 57 et 65% en poids par rapport au poids total de ladite composition insecticide.

De préférence, selon l'invention, la teneur en solvant léger est comprise entre 20 et 60% en poids, de préférence entre 30 et 50% en poids, préférentiellement entre 35 et 45% en poids par rapport au poids total de ladite composition insecticide.

De telles teneurs en solvant lourd et en solvant léger ont été définies comme étant optimales afin d'assurer des taux d'étourdissement (ou knockdown) et des taux de mortalité adéquats.

De préférence, la composition insecticide selon l'invention comprend en outre un parfum et/ou un agent de synergie et/ou d'autres pesticides comme un fongicide.

La présente invention porte également sur un aérosol insecticide constitué essentiellement par une composition insecticide selon l'invention et par un agent propulseur. La composition insecticide selon l'invention peut donc se présenter sous la forme d'un aérosol.

De préférence, lorsque la composition insecticide selon l'invention se présente sous la forme d'un aérosol, l'agent propulseur est choisi dans le groupe constitué du butane, du propane, de l'isobutane, du pentane et leurs mélanges.

Avantageusement, lorsque la composition insecticide selon l'invention se présente sous la forme d'un aérosol, la teneur en agent propulseur est comprise entre 30 et 70% en poids, de préférence entre 35 et 60% en poids, préférentiellement entre 40 et 50% en poids par rapport au poids total de ladite composition insecticide sous forme d'un aérosol.

La présente invention porte encore sur une utilisation d'une composition insecticide suivant l'invention ou d'un aérosol insecticide suivant l'invention pour lutter contre les insectes volants et rampants, par exemple pour lutter contre les mouches, les moustiques, les guêpes, les cafards, les blattes, les araignées, les fourmis, les punaises, les mites et les puces.

Selon la présente invention, l'utilisation d'une composition insecticide suivant l'invention ou d'un aérosol insecticide suivant l'invention peut être effectuée par application de la composition par vaporisation et/ou par application directe de la composition sur les insectes-cibles et/ou par application de la composition sur les surfaces avec lesquelles les insectes-cibles sont susceptibles d'être en contact (par exemple sur un vitrage lorsque l'insecte-cible est une mouche).

D'autres caractéristiques, détails et avantages de l'invention ressortiront des exemples donnés ci-après, à titre non limitatif.

### Exemples

### Exemple 1 : préparation d'une composition selon l'invention sous forme d'un aérosol (bombe aérosol)

Afin de préparer une composition selon l'invention, les composants tels que repris dans le Tableau 1 ci-dessous ont été mélangé dans une cuve avec agitateur. Pour obtenir une bombe aérosol, la composition ainsi obtenue a ensuite été placée dans un contenant pour aérosol muni d'une valve au travers de laquelle ont été chargés sous pression 25% en poids de butane (1,6 ± 0,2 bar à 20°C) et 18% en poids de propane (7,3 ± 0,2 bar à 20°C) par rapport au poids total de la composition sous forme d'un aérosol.

**Tableau 1**

| **Composition I** | % en poids par rapport au poids total de la composition sous forme d'un aérosol |
|---|---|
| Benzine de pétrole | 22,89 |
| Isoparaffine | 33,51 |
| D-trans-tétraméthrine (CAS 1166-46-7) | 0,35 |
| 1 R-trans-phénothrine (CAS 26046-85-5) | 0,15 |
| Parfum | 0,1 |

### Exemple 2 : comparaison d'une composition selon l'invention sous forme d'un aérosol et d'une composition de l'état de la technique sous forme d'un aérosol en termes d'efficacité sur des insectes volants

Une composition sous forme d'un aérosol telle que celle préparée à l'Exemple 1 a été comparée en termes d'efficacité à une composition sous forme d'un aérosol connue de l'état de la technique dont les composants sont repris dans le Tableau 2 ci-dessous. Ces composants ont été mélangé dans une cuve avec agitateur pour former une composition ensuite placée dans un contenant pour aérosol muni d'une valve au travers de laquelle ont été chargés sous pression 25% en poids de butane (1,6 ± 0,2 bar à 20°C) et 18% en poids de propane (7,3 ± 0,2 bar à 20°C) par rapport au poids total de la composition sous forme d'un aérosol.

**Tableau 2**

| **Composition II** | % en poids par rapport au poids total de la composition sous forme d'un aérosol |
|---|---|
| Benzine de pétrole | 22,5 |
| Isoparaffine | 32,97 |
| Esbiothrine (CAS 260359-57-7) | 0,18 |
| Perméthrine (CAS 52645-53-1) | 0,25 |
| Pipéronyl de butoxyde (CAS 51-03-6) | 1 |
| Parfum | 0,1 |

Afin de comparer les compositions sous formes d'aérosols telles que reprises aux tableaux 1 et 2, les temps pour obtenir des taux d'étourdissement de 10%, 50% et 95% (KT 10, KT 50 et KT 95) et le taux d'étourdissement après 1h (KD 1h) ont été établis sur des mouches (Musca domestica) et sur des moustiques (Culex quinquefasciatus) comme incestes-cibles. Le taux de mortalité après 24h a également été établi. Les essais (n=3) ont été respectivement menés sur 50 mouches et sur 50 moustiques âgés de 3 jours dans des chambres de 20 m³ à une température de 23-25°C et à une HR de 54-59%. Les insectes ont été introduit dans les chambres à T₀ₕ, c'est-à-dire en même temps que la vaporisation de la composition insecticide selon l'invention (Comp. I - Tableau 1) ou en même temps que la vaporisation d'une composition connue de l'état de la technique (Comp. Il - Tableau 2). Chacune des compositions testées a été vaporisée à raison d'une quantité de 5 g d'aérosol (gaz compris). Les résultats obtenus sont présentés au Tableau 3.

**Tableau 3**

| | | **KT 10 (min)** | **KT 50 (min)** | **KT 95 (min)** | **KD 1h (%)** | **Mortalité 24 h (%)** |
|---|---|---|---|---|---|---|
| **Mouche** | **Comp. Il** | 6'16 | 9'06 | 14'06 | 100 | 100 |
| | **Comp. I** | 2'30 | 4'00 | 8'37 | 100 | 100 |
| | | | | | | |
| **Moustique** | **Comp. II** | 2'50 | 3'33 | 4'16 | 100 | 100 |
| | **Comp. I** | 1'07 | 3'30 | 8'00 | 100 | 100 |

Comme on peut le constater, en ce qui concerne les mouches (Musca domestica), les taux d'étourdissement KT 10, KT 50 et KT 95 ont tous été obtenus plus rapidement avec une composition selon l'invention (Comp. I) en comparaison avec une composition de l'état de la technique comprenant de la perméthrine et de l'esbiothrine (Comp. II). Par ailleurs, 100% des mouches testées sont étourdies après 1h (KD 1h) et un taux de mortalité de 100% est observé après 24h. Pour les moustiques (Culex quinquefasciatus), les taux d'étourdissement KT 10, KT 50 ont été obtenus plus rapidement avec une composition selon l'invention (Comp. I) en comparaison avec une composition de l'état de la technique comprenant de la perméthrine et de l'esbiothrine (Comp. II). Par ailleurs, 100% des moustiques testés sont étourdis après 1h (KD 1h) et un taux de mortalité de 100% est observé après 24h. Il ressort de ceci qu'une composition selon l'invention (Comp. I) est au moins aussi efficace que celle de l'état de la technique comprenant de la perméthrine et de l'esbiothrine (Comp. II).

### Exemple 3 : efficacité d'une composition selon l'invention sous forme d'un aérosol par application sur une surface avec laquelle des mouches (Musca domestica) sont susceptibles d'être en contact

Des essais (n=4) ont été mené sur des mouches (Musca domestica) (n=100) pour évaluer l'efficacité d'une composition selon l'invention (Comp. I - Tableau 1) sous forme d'un aérosol par application (vaporisation) de la composition sur les contours de fenêtres en aluminium (surface avec laquelle l'insecte-cible est susceptible d'être en contact) à raison d'une quantité de 2,6 g d'aérosol (gaz compris). Ces essais ont été réalisé dans une chambre de 30m³ à une température de 24-26°C et à une HR de 41-48%. Les insectes ont été introduit dans les chambres à T₂ₕ, c'est-à-dire 2h après l'application de la composition selon l'invention. Le taux d'étourdissement après 8h (KD 8h) et le taux de mortalité après 24h ont été établi. Les résultats obtenus sont présentés au Tableau 4.

**Tableau 4**

| **KD 8h (%)** | **Mortalité 24h (%)** |
|---|---|
| 90,00 | 99,00 |

De ces essais, il ressort qu'une composition selon l'invention est également efficace lorsqu'elle est appliquée sur une surface avec laquelle l'insecte-cible est susceptible d'être en contact.

### Exemple 4 : efficacité d'une composition selon l'invention sous forme d'un aérosol par application sur une surface avec laquelle des mites (Tineola bisselliella) sont susceptibles d'être en contact

Des essais (n=5) ont été mené sur des mites (Tineola bisselliella) (n=20) pour évaluer l'efficacité d'une composition selon l'invention (Comp. I - Tableau 1) sous forme d'un aérosol par application (vaporisation) de la composition dans les angles (220 cm²) d'une armoire (surface avec laquelle l'insecte-cible est susceptible d'être en contact) à raison d'une quantité de 3 g d'aérosol (gaz compris). Ces essais ont été réalisé dans des armoires de 0,5m³ à une température de 24-26°C et à une HR de 52-65%. Les insectes ont été introduit dans les armoires à T_{1J} ou à T_{7J}, c'est-à-dire 1 jour ou 7 jours après l'application de la composition selon l'invention. Le taux de mortalité après 3 jours a été établi. Les résultats obtenus sont présentés au Tableau 5.

**Tableau 5**

| | **Mortalité 3 jours (%)** |
|---|---|
| **T_{1J}** | 100 |
| **T_{7J}** | 100 |

Ces essais démontrent qu'une composition selon l'invention est également efficace pour lutter contre les mites (Tineola bisselliella), que celles-ci soient en présence de la composition selon l'invention 1 jour ou 7 jours après son application (vaporisation) dans les angles d'une armoire, c'est-à-dire sur une surface avec laquelle l'insecte-cible est susceptible d'être en contact.

### Exemple 5 : efficacité d'une composition selon l'invention sous forme d'un aérosol par application sur une surface pour lutter contre des insectes rampants

Des essais (n=5) ont été mené sur les insectes adultes rampants suivants pour évaluer l'efficacité d'une composition selon l'invention (Comp. I - Tableau 1) sous forme d'un aérosol par application (vaporisation) de la composition sur une surface de 225 cm² : blatte Blattella germanica (n=10); blatte Periplaneta americana (n=10); punaise de lit Cimex lectularius (n=10) et puce Cimex felis (n=10). Ces essais ont été réalisé à une température de 25-26°C et à une HR de 54-65% et par vaporisation sur différents types de surfaces de 225 cm² d'une quantité de 5 g d'aérosol (gaz compris) pour les blattes et de 2,9 g d'aérosol (gaz compris) pour les punaises et les puces. Les blattes et les puces ont été maintenues en contact avec les surfaces durant 1 h tandis que les punaises ont été maintenues en contact avec les surfaces durant 6 h. Les taux d'étourdissement et de mortalité ont été établis selon ces durées de contact suite à une mise en contact des insectes avec les surfaces après un intervalle de temps donné suite aux traitements de ces dernières (1 jour, 7 jours, 17 jours). Les résultats obtenus sont présentés au Tableaux 6, 7, 8 et 9.

**Tableau 6**

| | | | **KD et mortalité (%)** | |
|---|---|---|---|---|
| | **Temps après exposition** | **Intervalle de temps avant exposition** | **Surface lisse** | **Surface poreuse** |
| **Blattella germanica** | 1 jour | 1 jour | 100 | 100 |
| | 7 jours | 1 jour | 100 | 100 |

**Tableau 7**

| | | | **KD et mortalité (%)** | |
|---|---|---|---|---|
| | **Temps après exposition** | **Intervalle de temps avant exposition** | **Surface lisse** | **Surface poreuse** |
| **Periplaneta americana** | 1 jour | 1 jour | 100 | 100 |
| | | 7 jours | 100 | 100 |
| | 7 jours | 1 jour | n.t. | 100 |
| | | 7 jours | n.t. | 94 |
| | 17 jours | 1 jour | 100 | n.t. |
| | | 7 jours | 100 | n.t. |

| | | | | |
|---|---|---|---|---|
| n.t. = non testé | | | | |

**Tableau 8**

| | | | **KD et mortalité (%)** | |
|---|---|---|---|---|
| | **Temps après exposition** | **Intervalle de temps avant exposition** | **Surface lisse** | **Surface en tissu** |
| **Cimex lectularius** | 1 jour | 1 jour | 100 | 100 |
| | 1 jour | 7 jours | 100 | 100 |

**Tableau 9**

| | | | **KD et mortalité (%)** | |
|---|---|---|---|---|
| | **Temps après exposition** | **Intervalle de temps avant exposition** | **Surface lisse** | **Surface de type carpette** |
| **Cimex felis** | 1 jour | 1 jour | 100 | 100 |

Comme on peut le constater des différents résultats obtenus, une composition selon l'invention est efficace contre les insectes rampants quel que soit le type de surface considéré, des taux d'étourdissement et de mortalité de 100% ou proche de 100% (94%) étant systématiquement relevés pour chacune des espèces d'insecte testée.

### Exemple 6 : efficacité d'une composition selon l'invention sous forme d'un aérosol par vaporisation directe sur des fourmis et des araignées

Des essais ont été mené pour évaluer l'efficacité d'une composition selon l'invention (Comp. I - Tableau 1) sous forme d'un aérosol par application (vaporisation) de la composition directement sur des araignées (Lycosidae spec.) et sur des fourmis (Lasius niger). Ces essais ont été réalisé à une température de 22°C et à une HR de 32-41% et par vaporisation à une distance de 40 cm d'une quantité de 2,9 g d'aérosol (gaz compris). Le temps pour obtenir un taux d'étourdissement de 100% (KT 100), le taux d'étourdissement après 2h (KD 2h) et le taux de mortalité après 24h ont été établi. Les résultats obtenus sont présentés au Tableau 10.

**Tableau 10**

| | **KT 100 (sec)** | **KD 2h (%)** | **Mortalité 24h (%)** |
|---|---|---|---|
| **Lasius niger** | 52" | 100 | 100 |
| **Lycosidae spec.** | 17" | 100 | 100 |

Comme on peut le constater des différents résultats obtenus, une composition selon l'invention est efficace contre les araignées et les fourmis, des taux d'étourdissement et de mortalité de 100% étant relevés. Par ailleurs un taux d'étourdissement de 100%M est obtenu très rapidement (< 1 min) dans les deux cas.

### Exemple 7 : efficacité d'une composition selon l'invention sous forme d'un aérosol sur des guêpes

Une composition sous forme d'un aérosol selon l'invention (Comp. I - Tableau 1) a été testée pour lutter contre des guêpes (Vespula vulgaris).

Les temps pour obtenir des taux d'étourdissement de 10%, 50% et 95% (KT 10, KT 50 et KT 95) et le taux d'étourdissement après 1h (KD 1h) ont été établis. Le taux de mortalité après 24h a également été établi. Les essais (n=3) ont été respectivement menés sur 20 guêpes dans des chambres de 20 m³ à une température de 23-25°C et à une HR de 54-59%. Les insectes ont été introduit dans les chambres à T₀ₕ, c'est-à-dire en même temps que la vaporisation de la composition insecticide selon l'invention (Comp. I - Tableau 1). Chacune des compositions testées a été vaporisée à raison d'une quantité de 5 g d'aérosol (gaz compris). Les résultats obtenus sont présentés au Tableau 11.

**Tableau 11**

| **KT 10 (min)** | **KT 50 (min)** | **KT 95 (min)** | **KD 1h (%)** | **Mortalité 24 h (%)** |
|---|---|---|---|---|
| 1,30 | 5'37 | 8'00 | 100 | 100 |

Comme on peut le constater, les taux d'étourdissement KT 10, KT 50 et KT 95 ont tous été obtenus rapidement avec une composition selon l'invention (Comp. I). Par ailleurs, 100% des guêpes testées sont étourdies après 1h (KD 1h) et un taux de mortalité de 100% est observé après 24h.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limitée aux exemples illustrés et/ou décrits ci-dessus.

L'usage des verbes « comprendre », « inclure », « comporter », ou toute autre variante, ainsi que leurs conjugaisons, ne peut en aucune façon exclure la présence d'éléments autres que ceux mentionnés.

L'usage de l'article indéfini « un », « une », ou de l'article défini « le », « la » ou « l' », pour introduire un élément n'exclut pas la présence d'une pluralité de ces éléments.

## Revendications

1. Composition insecticide comprenant :
- de la 1R-trans-phénothrine comme substance insecticide, et
- un solvant dans lequel ladite 1R-trans-phénothrine est diluée,
ladite composition étant **caractérisée en ce que** ledit solvant comprend au moins un hydrocarbure lourd présentant une densité comprise entre 0,75 et 0,85 et au moins un hydrocarbure léger présentant une densité comprise entre 0,65 et 0,8.

2. Composition insecticide selon la revendication 1 dans laquelle la teneur en 1R-trans-phénothrine est comprise entre 0,03 et 1% en poids, de préférence entre 0,04 et 0,9% en poids, préférentiellement entre 0,05 et 0,75% en poids par rapport au poids total de ladite composition insecticide.

3. Composition insecticide selon la revendication 1 ou 2 comprenant en outre au moins une deuxième substance insecticide additionnelle choisie dans le groupe constitué des composés suivants et de leurs isomères optiques et géométriques : alléthrine, pralléthrine, resméthrine, cyphénothrine, tétraméthrine et leurs mélanges.

4. Composition insecticide selon la revendication 3 dans laquelle la teneur en au moins une deuxième substance insecticide additionnelle est comprise entre 0,03 et 1% en poids, de préférence entre 0,04 et 0,9% en poids, préférentiellement entre 0,05 et 0,75% en poids par rapport au poids total de ladite composition insecticide.

5. Composition insecticide selon la revendication 3 ou 4 dans laquelle le rapport en poids de ladite 1R-trans-phénothrine à ladite au moins une deuxième substance insecticide additionnelle est compris entre 10 : 1 et 1 : 10, de préférence compris entre 10 : 1 et 1 : 5.

6. Composition insecticide selon l'une quelconque des revendications précédentes dans laquelle ledit au moins un hydrocarbure lourd présente un taux d'évaporation par rapport à l'éther compris entre 100 et 150 et ledit au moins un hydrocarbure léger présente un taux d'évaporation par rapport à l'éther compris entre 1 et 5.

7. Composition insecticide selon l'une quelconque des revendications précédentes dans laquelle le rapport en poids dudit hydrocarbure lourd à l'hydrocarbure léger est compris entre 3 : 1 et 1 : 1, de préférence compris entre 2 : 1 et 1 : 1.

8. Composition insecticide selon l'une quelconque des revendications précédentes dans laquelle ledit au moins un hydrocarbure lourd et/ou ledit hydrocarbure léger est un hydrocarbure aliphatique.

9. Composition insecticide selon l'une quelconque des revendications précédentes dans laquelle ledit hydrocarbure lourd est une isoparaffine et ledit hydrocarbure léger est une benzine.

10. Composition insecticide selon l'une quelconque des revendications précédentes dans laquelle la teneur en solvant lourd est comprise entre 50 et 80% en poids, de préférence entre 55 et 70% en poids, préférentiellement entre 57 et 65% en poids par rapport au poids total de ladite composition insecticide.

11. Composition insecticide selon l'une quelconque des revendications précédentes dans laquelle la teneur en solvant léger est comprise entre 20 et 60% en poids, de préférence entre 30 et 50% en poids, préférentiellement entre 35 et 45% en poids par rapport au poids total de ladite composition insecticide.

12. Aérosol insecticide constitué essentiellement par une composition insecticide selon l'une quelconque des revendications 1 à 11 et par un agent propulseur, de préférence par une composition insecticide selon l'une quelconque des revendications 1 à 11 et par un agent propulseur choisi dans le groupe constitué du butane, du propane, de l'isobutane, du pentane et leurs mélanges.

13. Aérosol insecticide selon la revendication 12 dans laquelle la teneur en agent propulseur est comprise entre 30 et 70% en poids, de préférence entre 35 et 60% en poids, préférentiellement entre 40 et 50% en poids par rapport au poids total de ladite composition insecticide sous forme d'un aérosol.

14. Utilisation d'une composition insecticide selon l'une quelconque des revendications 1 à 11 ou d'un aérosol insecticide selon l'une quelconque des revendications 12 ou 13 pour lutter contre les insectes volants et rampants, par exemple pour lutter contre les mouches, les moustiques, les guêpes, les cafards, les blattes, les araignées, les fourmis, les punaises, les mites et les puces.

15. Utilisation selon la revendication 14 par application par vaporisation et/ou par application directe sur les insectes-cibles et/ou par application sur les surfaces avec lesquelles les insectes-cibles sont susceptibles d'être en contact, par exemple sur un vitrage lorsque l'insecte-cible est une mouche.
